(19)

**Europäisches Patentamt**
**European Patent Office**
**Office européen des brevets**

(11)　**EP 4 357 562 B1**

(12)　　　　　**EUROPEAN PATENT SPECIFICATION**

(45) Date of publication and mention
　　 of the grant of the patent:
　　 **26.11.2025　Bulletin 2025/48**

(51) International Patent Classification (IPC):
　　 **E04H 15/62** *(2006.01)*　　　**E02D 17/20** *(2006.01)*
　　 **E02D 29/02** *(2006.01)*　　　**E02D 5/80** *(2006.01)*

(21) Application number: **23204592.2**

(52) Cooperative Patent Classification (CPC):
　　 **E04H 15/62; E02D 5/801; E02D 17/202;**
　　 A01G 13/38

(22) Date of filing: **19.10.2023**

(54) **ASSEMBLY COMPRISING MATTING AND PEGS FOR ATTACHING THE MATTING TO THE GROUND**

　　 BAUGRUPPE MIT MATTE UND HERINGEN ZUR BEFESTIGUNG DER MATTE AM BODEN

　　 ENSEMBLE COMPRENANT UN MAT ET DES PIQUETS POUR FIXER LE MAT AU SOL

(84) Designated Contracting States:
　　 **AL AT BE BG CH CY CZ DE DK EE ES FI FR GB**
　　 **GR HR HU IE IS IT LI LT LU LV MC ME MK MT NL**
　　 **NO PL PT RO RS SE SI SK SM TR**

(30) Priority: **21.10.2022　GB 202215654**

(43) Date of publication of application:
　　 **24.04.2024　Bulletin 2024/17**

(73) Proprietor: **Platipus Anchors Holdings Limited**
　　 **Redhill, Surrey RH1 4DP (GB)**

(72) Inventors:
　　 • **AGG, Charles**
　　 　**Redhill, Surrey RH1 4DP (GB)**
　　 • **RUSSELL, Mike**
　　 　**Redhill, Surrey RH1 4DP (GB)**

(74) Representative: **Boult Wade Tennant LLP**
　　 **Salisbury Square House**
　　 **8 Salisbury Square**
　　 **London EC4Y 8AP (GB)**

(56) References cited:
　　 WO-A1-99/06639　　　WO-A2-2016/020631
　　 FR-A1- 2 869 197　　　US-A1- 2022 170 225
　　 US-B1- 10 077 893

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Field of Invention**

The present invention relates to an assembly comprising matting and a plurality of pegs.

**Background**

In certain locations, it is necessary to provide erosion limitation arrangements. This can be accomplished by laying matting over the ground in that location and securing the matting to the ground. The matting can be secured to the ground using ground anchors, such as, for example, those described in patent number GB2398808B.

However, due to the spacing of the ground anchors, the matting can become loose between the anchors which would reduce its effectiveness at limiting erosion. Therefore, there is a need for securing means to secure the matting to the ground between the ground anchors and for use other situations where ground anchors are not suitable.

WO2016/020631A2 discloses one such securing means to secure the matting to the ground.

However, the device disclosed in WO2016/020631A2 is difficult to use because it does not remain stable during insertion into the ground. In addition, this device may be difficult to screw into the ground and may not secure to the ground with a sufficient pull-out force. Consequently, this device may not secure the matting to the ground in an optimal manner. Similarly, FR 2 869 197 A1 also discloses an assembly of matting and securing pegs according to the state of the art.

US10077893B1 describes an anchoring system may include one or more anchors. An anchor may include a first coupling member, a second coupling member, and a plate. The anchor may be coupleable to other anchors and/or objects. The anchoring system may be used to secure an object to a location.

US2022/170225A1 describes a helical pile and a bracket module comprising the same. The helical pile includes a column body, at least a helical blade and a loading member. The column body has a fixing end, a loading end opposite to the fixing end, and a body section between the fixing end and the loading end. The helical blade is disposed on the column body between the fixing end and the loading end. The loading member is connected to the loading end of the column body and includes a flange. The ratio of the body diameter of the column body to the blade diameter of the helical blade ranges from 1:3 to 1:7.

WO99/06639A1 describes a screw-in anchor element which has a shaft, helical flight adjacent a leading end, a helical flight adjacent a trailing end, and a drive coupling. The anchor element is screwed into the ground with the leading end placed in relatively stable soil and the trailing end placed in relatively unstable soil. The flight may be of greater pitch than the flight. The shaft may be hollow. Therefore, there is a need for an improved assembly of matting with a securing device for securing matting to the ground

**Summary**

According to the invention, there is provided an assembly according to claim 1.

The features of the peg, such as the contact surface extending around a periphery of the shaft, advantageously cause the peg to hold the matting securely against the ground. The shaft comprises at least two threaded portions, referred to herein as first and second threaded portions and at least two non-threaded portions, referred to herein as first and second non-threaded portions. Each threaded portion is spaced apart from an adjacent threaded portion by a non-threaded portion thereby causing the peg to engage separate cones of soil when the peg is inserted into the ground. This reduces the torque force required to screw the peg into the ground, while ensuring a high enough pull-out force.

Optionally, the first non-threaded portion is tapered along the longitudinal axis towards the second end. Optionally, the first non-threaded portion is tapered at an angle of between 5 and 20. Optionally, the length of the shaft is between 10 cm and 50 cm. More preferably, the length of the shaft is between 10 cm and 30 cm. Optionally, the first non-threaded portion of the shaft has a length of more than 1/8th of the length of the shaft, preferably between 1/8th and half of the length of the shaft, more preferably between 1/8th and 1/3rd of the length of the shaft, and even more preferably between 1/6th and 1/4th of the length of the shaft.

Preferably, the shaft is tapered along more than 1/4 of the length of the shaft, preferably along more than 1/3 of the length of the shaft, more preferably along more than 1/2 of the length of the shaft or along the whole of the length of the shaft. Optionally, the shaft is tapered at an angle that increases from the first end to the second end, preferably wherein the angle at which the shaft is tapered increases from the first end to the second end by between 1 and 20 degrees, preferably by between 5 and 10 degrees.

Preferably, a diameter of the head portion is more than 3 cm and preferably a diameter of the first end of the shaft is less than 2 cm. Preferably, the contact surface comprises a surface area of more than 3 cm$^2$. Optionally, the contact surface is a planar surface. The planar surface advantageously spreads the force imparted by the peg to the matting over a larger surface area. Spreading the force over a larger surface area reduces the pressure applied by the peg to the matting, and therefore reduces the risk of the peg tearing the matting.

Preferably, each of the threaded portions form the same helix. This advantageously aids the user in screwing the peg into the ground.

Optionally, each threaded portion has a length between 1/10th and 9/10th of the length of the shaft, preferably between 1/10th and 4/5th of the length of the shaft and even more preferably between 1/10th and 1/3rd of the length of the shaft.

Preferably, the second non-threaded portion extends from the first end of the shaft. In other words, the threaded portion proximal to the first end of the shaft is spaced apart from the first end of the shaft by the second non-threaded portion. This advantageously ensures that the peg does not snag the matting when it is inserted.

The peg is preferably formed of a plastic. This advantageously allows the peg to be injection moulded. Preferably the plastic is an engineering plastic. This advantageously gives the peg increased strength. More preferably the plastic is a UV resistant or UV inhibited plastic, the plastic may be a UV resistant/inhibited engineering plastic. This advantageously ensures that the peg will not degrade when it is left outside in direct sunlight for extended periods of time in use.

Optionally, each threaded portion has a thread height of at least 2 mm, preferably 3-10 mm. The thread height may be the distance from a root to a crest of a thread. In other words, the thread height may be the radial distance from the shaft to the outer edge of the screw thread.

Preferably, the peg comprises at least one cutting edge proximal to the second end. This advantageously allows the peg to break up hard soil as it is screwed into the ground and thereby aids insertion of the peg into the ground. The at least one cutting edge may form the second end. The second end may comprise the at least one cutting edge.

Optionally, the second end is formed as a point. This advantageously ensures that the peg is stable in an upright position as it is screwed into the ground provides a point of contact which is stable during rotation, and enables ease of piercing the matting and insertion into the ground. Preferably, the head portion is configured to engage with a drive tool. This advantageously allows the peg to be used with a drive tool to aid insertion into the ground.

Optionally, an outer periphery of the head portion is configured to engage with the drive tool to secure the peg to the drive tool. The periphery of the head portion may form an interference fit with the drive tool. The drive tool may circumferentially engage with the head portion. The interference fit between the outer periphery of the head portion of the peg and the drive tool can keep the peg engaged with the drive tool even when the peg is below the drive tool. This advantageously allows the peg to be screwed into the ground using the drive tool without holding the peg in place and allows a user to screw the peg into the ground using the drive tool while the user is in a standing position.

In addition or alternatively, the head portion may comprise peg engagement means configured to engage with the drive tool and transmit torque from the drive tool to the peg. Optionally, the peg engagement means may form a clearance fit with the drive tool.

In one embodiment, the outer periphery of the head portion is configured to form an interference fit with a cavity of the drive tool and the peg engagement means is configured to form a clearance fit with corresponding engagement means of the drive tool. In such an arrangement, the peg can be easily secured to the drive tool without precise alignment by a user but torque can still be transmitted from the drive tool to the peg.

The peg engagement means may optionally be one or more protrusions. This advantageously also stiffens the head portion so that the head portion may comprise less material or be less likely to buckle in use.

There is also provided a kit of parts comprising the peg described above comprising the peg engagement means and a drive tool. The drive tool is configured to engage with the peg.

Optionally, the drive tool comprises a cavity for receiving the head portion of the peg. In particular, the cavity of the drive tool may be shaped to form an interference fit with the outer periphery of the head portion of the peg. The periphery of the cavity may circumferentially engage with the outer periphery of the head portion of the peg. Additionally or alternatively, the drive tool may also comprise a drive tool engagement means configured to engage with the peg engagement means. The drive tool engagement means may be configured to form a clearance fit with the peg engagement means for transmitting torque from the drive tool to the peg.

This kit of parts can advantageously be used to easily screw the peg through the matting into the ground.

Optionally, the kit of parts further comprises a drill. The drive tool is configured to attach to the drill such that the drive tool rotates when the drill is operated. This advantageously allows the drive tool to be rotated easily.

Optionally, the kit of parts may further comprise matting.

There is also provided a kit of parts comprising matting and a plurality of the pegs as described above.

According to the invention there is provided an assembly comprising matting and a plurality of pegs the pegs as described above. Each peg is screwed into the matting at a respective location such that each peg is spaced apart from an adjacent peg.

Each peg being screwed into the matting at a respective location such that each peg is spaced apart from an adjacent peg advantageously causes the matting to be secured tightly to the ground.

Optionally, the shaft comprises two or more threaded portions and two or more non-threaded portions, each threaded portion spaced apart from an adjacent threaded portion by a non-threaded portion.

The description of the pegs above equally applies to the pegs of the assembly.

There is also provided a method of securing matting to the ground using the kit of parts comprising matting and a plurality of pegs for securing the matting to the ground described above. The method comprises placing the matting on the ground; engaging the second end of the shaft with the matting; and rotating the peg such that the screw-thread of the peg is screwed through the matting into the ground. The peg is rotated until the contact surface contacts the matting and holds the matting against the ground.

Optionally, the shaft comprises two or more threaded portions and two or more non-threaded portions, each threaded portion spaced apart from an adjacent threaded portion by a non-threaded portion.

The description of the pegs above equally applies to the pegs employed in the method.

Preferably, the method further comprises engaging a drive tool with the peg; and rotating the drive tool such that the peg is screwed through the matting into the ground.

More preferably, the method further comprises attaching the drive tool to a drill and operating the drill to rotate the drive tool.

The method may comprise engaging an outer periphery of the head portion of the peg with a cavity of the drive tool, optionally the outer periphery of the head portion of the peg and the cavity of the drive tool may form an interference fit. The drive tool, optionally a cavity within the drive tool, may circumferentially engage the head portion of the peg.

The method may further comprise engaging peg engagement means with drive tool engagement means of the drive tool such that torque may be transmitted from the drive tool to the peg due to engagement between the peg engagement means and drive tool engagement means. The peg engagement means and the drive tool engagement means may form a clearance fit.

## Brief description of figures

For a better understanding of the invention, and to show how the same may be put into effect, reference will now be made, by way of example only, to the accompanying drawings in which:

Figures 1(a) and (b) are perspective view of a peg for securing matting to the ground;

Figure 2 is a perspective view of part of the shaft of the peg of Figures 1(a) and (b);

Figure 3 is a perspective view of a kit of parts comprising the peg of Figures 1(a) and (b) and a drive tool. Only a partial view of the peg is shown in Figure 3;

Figure 4 is a perspective view of a kit of parts comprising a plurality of the pegs of Figures 1(a) and (b) and matting; and

Figure 5 is a side elevation cross sectional view of an assembly containing a plurality of the pegs of Figures 1(a) and (b) and matting where the plurality of pegs are inserted through matting into the ground.

Figure 6 is a perspective view of the assembly of Figure 5.

Figure 7 is a perspective view of an assembly containing a plurality of the pegs of Figures 1(a) and (b), matting and ground anchors where the plurality of pegs and ground anchors are inserted through matting into the ground.

## Detailed Description

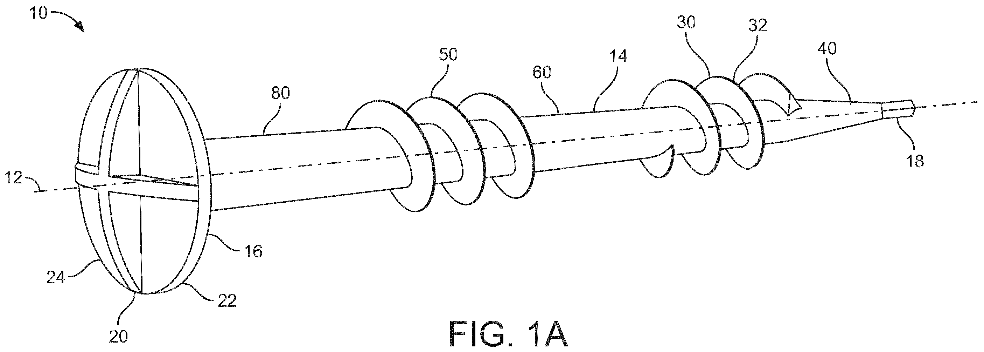

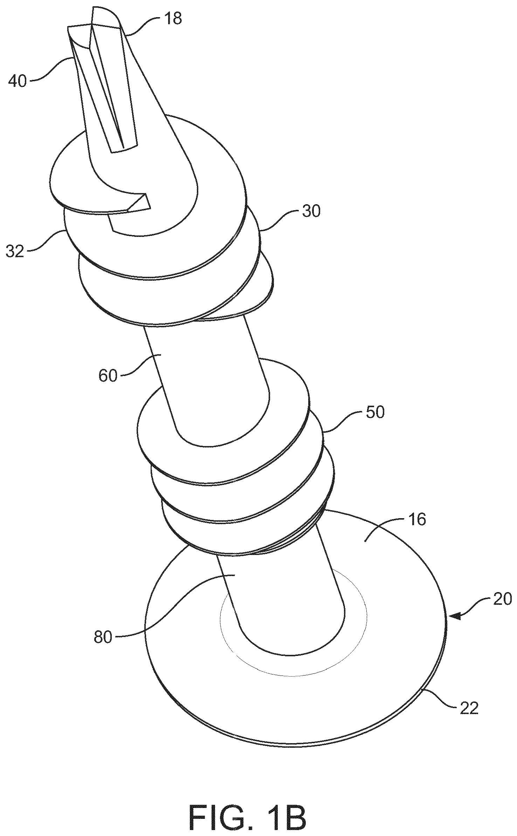

As shown in Figures 1(a) and (b), referred to herein collectively as Figure 1, there is disclosed a peg 10 for securing matting to the ground. The peg 10 has a longitudinal axis 12. The peg 10 comprises a shaft 14 extending between a first end 16 and a second end 18 along the longitudinal axis 12. The shaft 14 has a length L measured from the first end 16 to the second end 18. The length of the shaft L is optionally between 10 cm and 50 cm, particularly between 10 cm and 30 cm. The shaft 14 has a circular cross section in the embodiment shown in Figure 1 but alternatively shaped cross-sections are contemplated.

In this optional arrangement, the shaft 14 is tapered along the whole of the length of the shaft L. The shaft 14 optionally has a taper angle of between 0.2 and 10 degrees. The taper angle at a location along the shaft is an angle measured between the longitudinal axis 12 and a line which is a tangent to the surface of the shaft 14 at that location. In alternative arrangements, the shaft may be tapered along a part of the length of the shaft L. For example, the shaft 14 may be tapered along a part of the length of the shaft L that may be more than 1/4 of the length of the shaft L or more than 1/3 of the length of the shaft L or in alternative arrangements, the shaft 14 is not tapered and so substantially cylindrical along most of its length.

The peg 10 further comprises a head portion 20 extending radially outwardly from the first end 16 of the shaft 14. The head portion 20 extends radially outwardly from the longitudinal axis 12. The head portion 20 optionally has a circular shape but other shapes are contemplated, such as a square. The diameter of the head portion 20 is optionally more than 3 cm. Preferably the diameter of the first end 16 of the shaft 14 may be less than 2 cm. The head portion 20 optionally extends radially beyond the shaft 14 by at least 0.5 cm. In some embodiments, the head portion 20 extends radially beyond the shaft 14 by more than 1 cm. The head portion 20 and shaft 14 may form a unitary body.

The head portion 20 comprises a contact surface 22, from which the shaft 14 extends, for contacting the matting 100 and holding the matting 100 against the ground 200. The contact surface 22 extends around a periphery of the shaft 14. The contact surface 22 is the lower surface of the head portion 20 that is proximal to the first end 16 of the shaft 14. The lower surface may be defined as the surface of the head portion 20 facing the shaft 14. The contact surface 22 optionally has a surface area of more than 3 cm$^2$ or more than 5 cm$^2$. The contact surface 22 is optionally a planar surface i.e. is substantially planar. The contact surface 22 optionally has an annular shape. The contact surface 22 may be configured to spread the force imparted by the peg 10 to the matting 100. The contact surface 22 can allow the peg 10 to hold the matting 100 against the ground 200 with a low pressure to avoid tearing the matting 100.

In the embodiment shown in Figure 1, the contact surface is optionally a solid continuous surface. Alternatively, the contact surface may be a mesh or ribbed surface. By way of further alternative, the contact surface 22 may be formed as a ring of material radially spaced apart from the shaft 14 by an air gap.

The head portion 20 optionally further comprises peg engagement means 24 for engaging with a drive tool to transmit torque from the drive tool to the peg 10. Configuring the peg 10 to be used with the drive tool can aid insertion of the peg 10 into the ground 200. As shown in the illustrated embodiment, the peg engagement means 24 optionally has one or more protrusions 24. The one or more protrusions 24 are optionally formed on an upper surface of the head portion 20 (wherein the upper surface is the surface facing away from the shaft 14). The one or more protrusions 24 may protrude in the direction of perpendicular to the upper surface of the head portion 20 (i.e. parallel to the longitudinal axis 12). The one or more protrusions 24 are optionally in the shape of a cross in the embodiment of Figure 1 and so extend in a radial direction. The one or more protrusions 24 can stiffen the head portion 20 so that the head portion 20 may comprise less material or be less likely to buckle in use. Alternatively, the peg engagement means may comprise one or more grooves in the head portion 20.

The shaft 14 comprises a first threaded portion 30. The first threaded portion 30 comprises a screw-thread 32. The first threaded portion 30 extends along a part of the length L of the shaft 14, for example. In the embodiment shown in Figure 1, the first threaded portion optionally extends along 1/5th of the length L of the shaft 14. In alternative embodiments, the first threaded portion 30 may extend along a portion of the length L of the shaft that is between 1/3rd and 1/8th of the length of the shaft 14, particularly between 1/4th and 1/6th of the length of the shaft 14. The first threaded portion 30 may comprise a screw thread 32 along its entire length. The screw thread 32 may comprise a helical ridge on the outside of the shaft 14. The screw thread 32 may comprise a number of turns. The screw thread 32 may comprise at least three turns. The screw thread 32 may comprise a constant pitch, that is the distance between adjacent turns may be a constant value along the screw thread 32. The screw thread 32 and the shaft 14 may form a unitary body. Each threaded portion may have a thread height of at least 2 mm, preferably 3-10 mm. The thread height may be the distance from a root to a crest of a thread. In other words, the thread height may be the radial distance from the shaft 14 to the outer edge of the screw thread 32. The first threaded portion 30 may be configured to engage the ground 200. The first threaded portion 30 may be configured to secure the peg 10 to the ground 200 and impart a force to the matting 100 to hold it against the ground.

The shaft comprises a first non-threaded portion 40 extending from the second end 18. The non-threaded portion 40 is unthreaded and so does not have a screw thread along its length. The non-threaded portion 40 has a smooth surface. A smooth surface may be defined as a surface without a screw thread or ridges present. At least a part of the first non-threaded portion 40 is optionally tapered along the longitudinal axis 12 towards the second end 18. For example, at least a part of the first non-threaded portion 40 may be tapered at an angle of, for example, between 2 and 20 degrees, preferably between 4 and 10 degrees.

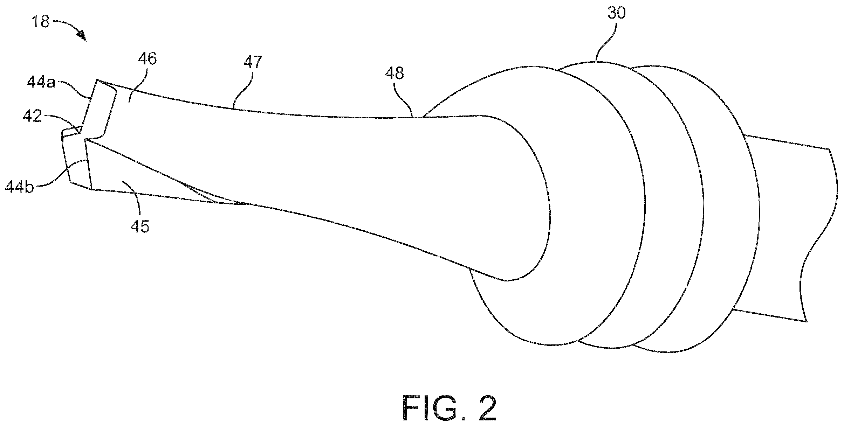

Figure 2 shows the second end 18, the first non-threaded portion 40 and some of the first threaded portion 30 of the peg 10 in more detail. The first non-threaded portion 40 may be configured for piercing matting 100. The first non-threaded portion 40 may be configured for piercing and/or breaking up the ground 200. The first non-threaded portion 40 may be configured for keeping the peg 10 straight as the peg 10 is inserted into the ground 200.

The first non-threaded portion 40 may comprise at least one cutting edge 44a, 44b proximal to the second end 18. The cutting edge(s) 44a, 44b may also have a thickness of up to, for example 3 mm, and still function as an edge. The cutting edge(s) 44a, 44b may form the second end 18. As best shown in Figure 2, the peg 10 optionally has first and second cutting edges 44a, 44b forming the second end 18. The cutting edges optionally meet at a point at the second end 18. As best shown in Figure 2, the cutting edge(s) 44a, 44b optionally meet at an angle of between 170 and 100 degrees to form the second end 18. The cutting edge(s) 44a, 44b are optionally straight edges and formed by the meeting of two surfaces at an angle. The angle between the surfaces forming the cutting edges may be between 1 and 20 degrees. More specifically, each cutting edge 44a, 44b may be formed between an inner surface 45, which is optionally substantially planar/flat in the embodiment shown in Figure 2 and an outer surface 46, which is optionally curved in the embodiment shown in Figure 2. The inner surfaces 45 may be opposing and optionally offset from each other about the longitudinal axis, as shown in Figure 2.

In Figure 2, the two cutting edges 44a, 44b are optionally offset from each other about the longitudinal axis. The peg is optionally rotationally symmetrical about the longitudinal axis. In particular, the first non-threaded portion 40 optionally is rotationally symmetrical about the axis. The first non-threaded portion optionally has a rotational symmetry of order two, such that it comprises two cutting edges 44, two inner surfaces 45 and two outer surfaces 46 proximal to the second end, offset at 180 degrees from each other around the longitudinal axis 12.

As discussed above, at least a part of the first non-threaded portion 40 may be tapered. In the embodiment shown in Figure 2, the first non-threaded portion optionally has a tapered part 48 proximal to the first non-threaded portion. A non-tapered part 47 optionally extends between the tapered part 48 and the inner and outer surfaces 45, 46 forming the cutting edges 44a, 44b. The non-tapered part 47 is optionally cylindrical.

Returning to the optional arrangement shown in Figure 1, the shaft 14 is tapered at an angle that increases from the first end 16 to the second end 18. In other words, the shaft 14 may have a larger taper at the second end 16 than at the first end 18. Optionally, the angle at which the shaft 14 is tapered may increase from the first end 16 to the second end 18 by between 1 and 20 degrees and preferably by between 3 and 8 degrees. A taper angle may also be defined as a taper ratio.

The first non-threaded portion 40 optionally has a length of between 1/8th and half of the length of the shaft L, for example, the first non-threaded portion 40 optionally has a length of between 1/8th and 1/3rd of the length of the shaft L. In the embodiment shown in Figure 1, the first non-threaded portion has approximately the same length as the first threaded portion, which is between 1/6th and 1/4th of the length of the shaft L.

In the embodiment shown in Figure 1, the shaft 14 optionally comprises two or more threaded portions 30, 50 and two or more non-threaded portions 40, 60. In other words, the shaft 14 may comprise the first threaded portion 30, a second threaded portion 50, the first non-threaded portion 40 and a second non-threaded portion 60. Each threaded portion 30, 50 is spaced apart from an adjacent threaded portion 30, 50 by a non-threaded portion 60. Each threaded portion 30, 50 may have features described above in relation to the first threaded portion 30. Each non-threaded portion 40, 60 may comprise some features described above in relation to the first non-threaded portion 40 such as not comprising a screw thread or comprising a smooth outer surface. Each threaded portion 30, 50 may be configured to engage a separate cone of soil when the peg 10 is inserted in the ground 200. The threaded portions 30, 50 may be spaced apart along the longitudinal axis 12. In other words, the first threaded portion 30 may be spaced apart from the second threaded portion 50 by the second non-threaded portion 60.

Each of the threaded portions 30, 50 may form the same helix. Forming the same helix may mean that the circumferential location at which one threaded portion 30 ends is the same circumferential location a second threaded portion 50 begins, despite the second threaded portion 50 starting at a lower axial location than the end of the first threaded portion 30.

Each threaded portion optionally has a length between 1/10th and 9/10th of the length of the shaft, particularly between 1/10th and 4/5th of the length of the shaft. In the specific embodiment shown in Figure 1, each threaded portion has a length of between 1/6th and 1/4th the length of the shaft. The length of at least one of the threaded portions 30, 50 may be equal to the length of at least one the lengths of the non-threaded portions 40, 60. In the specific embodiment shown in Figure 1, the length of each of the threaded portions 30, 50 may be equal to each other and to the length of each of the non-threaded portions 60. In other words, a 1:1 relationship may exist between the length of each of the threaded portions 30, 50 and each of the non-threaded portion 60.

The threaded portion 50 proximal to the first end of the shaft 14 may be spaced apart from the first end 16 of the shaft 14 by a non-threaded portion 80. In particular, the second threaded portion 50 may be spaced apart from the first end 16 of the shaft 14 by a third non-threaded portion 80. The third non-threaded portion 80 may be configured such that the peg 10 does not snag or get caught on the matting 100 when the peg 10 is inserted through matting 100 into the ground 200. The third non-threaded portion 80 may comprise some features described above in relation to the first non-threaded portion 40 such as not comprising a screw thread or comprising a smooth outer surface. The third non-threaded portion 80 may comprise a length equal to the length of at least one of the threaded portions 30, 50.

The peg 10 may be formed of a plastic. Preferably the peg 10 may be of an engineering plastic, more preferably of a UV inhibited engineering plastic. The UV inhibited engineering plastic may also be describes as a UV-resistant engineering plastic. Alternatively, the peg 10 could be formed of metal or another material and have the same effect, but plastic is preferable.

The peg 10 may be manufactured by injection moulding. Alternatively, the peg 10 may be manufactured by additive manufacture, or tooling.

Figure 2 shows a kit of parts comprising a peg 10 as described above and a drive tool 100.

The drive tool 100 optionally has a cavity 131 configured to receive the head portion 20 of the peg 10 to secure the peg 10 to the drive tool 100. In particular, the cavity 131 has a smaller diameter than the diameter of the head portion 20 of the peg 10 such that the outer periphery of the head portion 20 of the peg 10 and the cavity 101 form an interference fit. The cavity 131 optionally has drive tool engagement means 124 configured to engage with the peg engagement means 24 for transmitting torque from the drive tool 100 to the peg 10. Optionally, the drive tool engagement means 124 and the peg engagement means 24 form a clearance fit. In this arrangement, a user can easily secure the peg 10 to the drive tool 100 using the interference fit between the periphery of the head portion and the cavity 131 of the drive tool 100 without precise alignment. The user can transmit torque from the drive tool 100 to the peg 10 by rotating the drive tool 100 due to the clearance fit between the peg engagement means 24 and the drive tool engagement means 124. By employing a clearance fit between the peg engagement means 24 and the drive tool engagement means 124, a less precise alignment is required compared to, for example, an interference fit. Engaging the drive tool engagement means 124 with the peg engagement means 24 can allow a user to easily rotate the peg 10 by rotating the drive tool 100. This can aid a user in inserting the peg 10 into matting and/or into the ground. The peg engagement means 24 are complementary to the drive tool engagement means 124.

An exemplary embodiment of the drive tool 100 is shown in Figure 2. In this exemplary embodiment shown, the drive tool 100 comprises a body 130 having a cavity 131 formed therein and a drive tool shaft 140. The body 130 in Figure 2 has an outer periphery that is curved. In the arrangement shown, the cavity has a diameter defined by its outer periphery that is smaller than the outer periphery of the head portion 20 of the peg 10 such that the outer periphery of the cavity and the outer periphery of the head portion form an interference fit to secure the peg 10 to the drive tool 100. The interference fit can provide increased friction which can keep a peg 10 engaged with the drive tool 100 even when the peg 10 is lower than the drive tool 100. This can aid a user when inserting a peg 10 into the ground as they would not simultaneously have to hold the peg 10 and drive tool 100 in position and can instead just hold the drive tool 100.

In the arrangement shown, the drive tool engagement means 124 are optionally grooves 124 formed within the cavity 131 of the body.. The grooves 124 optionally take the shape of a cross but other shapes are contemplated. In an embodiment where the drive tool engagement means 124 comprises grooves, such as that shown in Figure 2, the peg engagement means 24 may comprise protrusions. In the embodiment shown in Figure 2, the protrusions optionally take the shape of a cross. Peg engagement means 24 having the protrusions 24 is advantageous because the protrusions 24 can stiffen the head portion 20 so that the head portion 20 may comprise less material or be less likely to buckle in use. The peg engagement means 24 and the drive tool engagement means 124 are configured to form a clearance fit such that exact alignment is not required for engagement. Torque is transmitted from the drive tool 100 to the peg 20 via the engaged peg engagement means 24 and drive tool engagement means 124. The clearance fit may occur when the peg engagement means 24 is engaged with the drive tool engagement means 124. For example, if the peg engagement means 24 comprises protrusions 24 and the drive tool engagement means 124 comprises grooves 124, the clearance fit can be formed by ensuring the protrusions 24 have a smaller width than the grooves 124.

As shown in Figure 2, the drive tool shaft 140 may be cylindrical and may extend from an opposite side of the body 130 to the cavity 131. The drive tool shaft 140 may be of a smaller diameter than the body 130. The drive tool shaft 140 and body 130 optionally form a unitary body and may be formed of metal by casting or tooling among other methods.

The kit of parts may further comprise a drill. The drive tool 100 may be configured to attach to the drill such that the drive tool 100 rotates when the drill is operated. The drive tool shaft 140 may be configured such that it is engageable with the drill. Using a drill in combination with the drive tool 100 and peg 10 can aid a user when inserting a peg 10 into the ground since it provides an easy method for rotating the peg 10.

Alternatively, the kit of parts may further comprise a bit and brace. The bit and brace comprise a crank-shaped turning device that grips and rotates the drive tool 100. In another embodiment, the drive tool 100 may further comprise a crank shaped shaft extending from the drive tool shaft 140.

The kit of parts may further comprise matting. The drive tool 100 can be used to rotate the peg 10 as it is inserted through the matting.

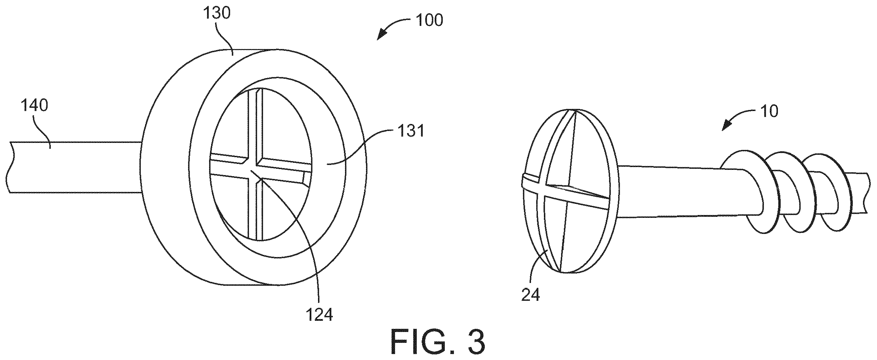

Figure 3 shows a kit of parts comprising matting 200 and a plurality of pegs 10 for securing the matting 200 to the ground. The matting 200 may be geotextile matts. Alternatively, the matting 200 may be any material configured to be secured to the ground. The matting 200 may be of a woven structure. The matting 200 may be formed of fibers.

The ground may be substantially formed of, for example, soil and/or clay and/or vegetation.

Each of the plurality of pegs 10 are optionally configured as shown in Figure 1. Although the shaft 14 of the peg 10 is shown as having two threaded portions 30, 50 and two non-threaded portions 40, 60 the shaft 14 may instead have only one threaded portion 30 and one non-threaded portion 40 wherein the non-threaded portion 40 is proximal the second end 18. By way of further example, the shaft 14 may comprise more than two threaded portions 30, 50 and more than two non-threaded portions 40, 60, each threaded portion 30, 50 spaced apart from an adjacent threaded portion 30, 50 by a non-threaded portion 60. The pegs may further comprise any of the optional features described in connection with the peg 10 of Figure 1 above.

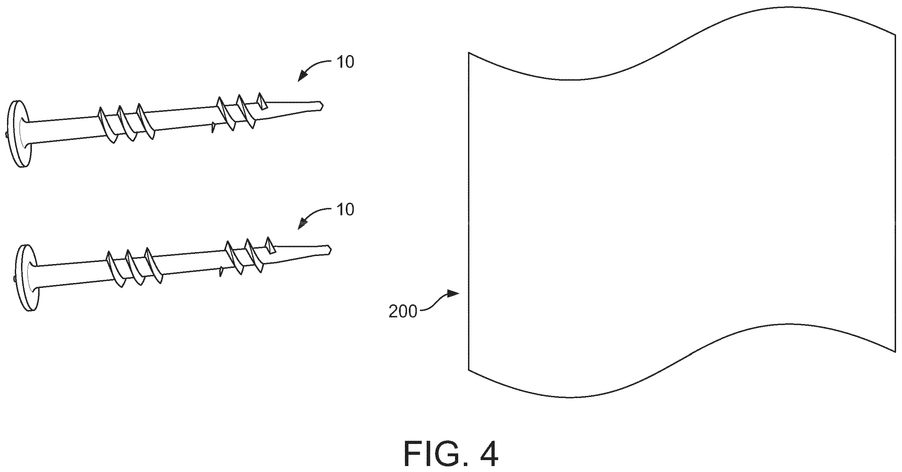

Figure 4 shows a kit of parts comprising matting 200 and a plurality of pegs 10 for securing the matting 200 to the ground 300.

Each of the plurality of pegs 10 are optionally configured as shown in Figure 1. Although the shaft 14 of the peg 10 is shown as having two threaded portions 30, 50 and two non-threaded portions 40, 60 the shaft 14 may have only one threaded portion 30 and one non-threaded portion 40 wherein the non-threaded portion 40 is proximal the second end 18. By way of further example, the shaft 14 may comprise more than two threaded portions 30, 50 and more than two non-threaded portions 40, 60, each threaded portion 30, 50 spaced apart from an adjacent threaded portion 30, 50 by a non-threaded portion 60. The pegs may further comprise any of the optional features described in connection with the peg 10 of Figure 1 above.

Each peg 10 is screwed into the matting 200 at a respective location such that each peg 10 is spaced apart from an adjacent peg 10. Each peg 10 has all the features described in connection with the peg 10 of the kit of parts described above in relation to Figure 3.

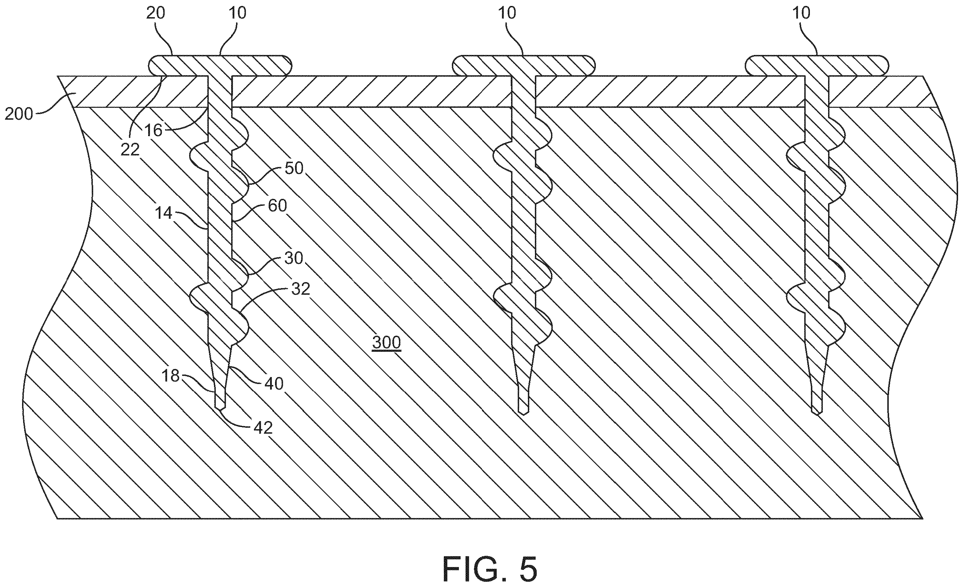

Figure 5, 6 and 7 each show an assembly comprising matting 200 and a plurality of the pegs 10 shown in Figure 1 where the pegs 10 are screwed through the matting 200 into the ground 300 to secure the matting 200 to the ground 300.

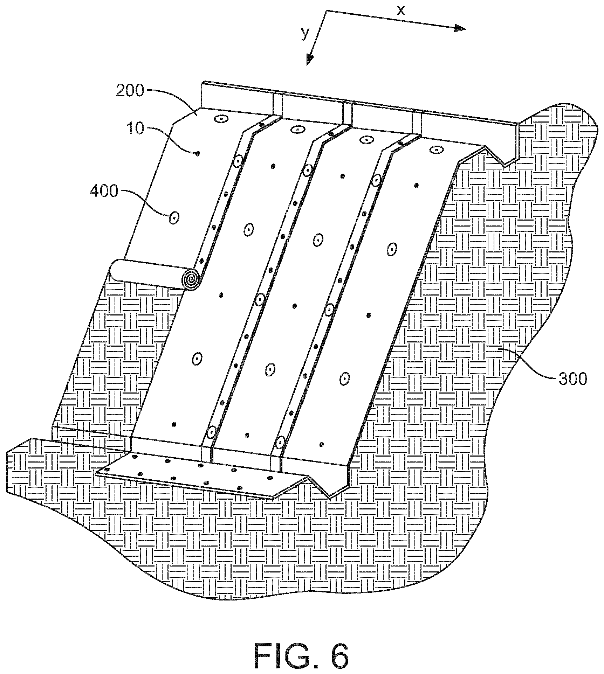

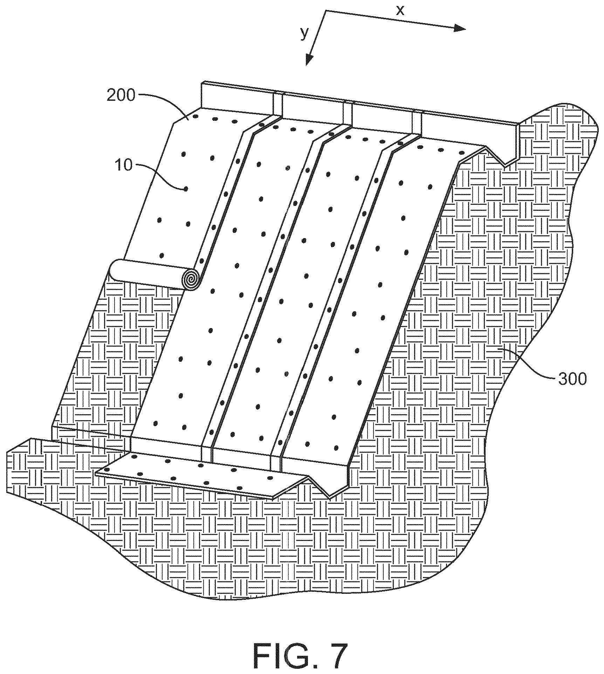

The assembly of Figure 7 optionally further comprises ground anchors 400 screwed into the matting to further secure the matting 200 to the ground 300 whereas the assembly of Figures 5 and 6 only uses pegs 10 to secure the matting to the ground 300.

Figures 6 and 7 are perspective views of the assembly whereas Figure 5 is a side elevation cross sectional view.

Each peg 10 may be spaced apart from adjacent pegs 10 by between 0.2 and 3m. As shown in Figure 6, when only pegs 10 are used to secure the matting 200 to the ground 300, each peg 10 may be spaced apart from the adjacent pegs 10 by between 0.2 and 1.5 m, preferably between 0.5 and 1.2 m. As shown in Figure 5, when both pegs and anchors are used to secure matting 200 to the ground 300, ground anchors 400 may be positioned between adjacent pegs 10 and the spacing between adjacent pegs 10 and ground anchors 400 may be, for example, between 0.1 and 2.5 m, preferably between 0.25 and 2 m. In particular, in the direction across a slope of ground, in the x direction shown in Figure 6, the spacing between a ground anchor 400 and an adjacent peg 10 may be approximately 0.2-1.5 m, preferably 0.25-1m. In the direction down a slope of ground, in the y direction shown in Figure 6, the spacing between an adjacent ground anchor 400 and an adjacent peg 10 may be, for example 0.2-2.5 m, preferably 0.5-2m.

Exemplary ground anchors 400 that may be used to secure matting 200 to the ground 300 are described in patent number GB2398808A,

The spacing between adjacent pegs 10 in an arrangement using only pegs 10 to secure the matting 2200 to the ground 300 is smaller than the spacing between a peg 10 and an adjacent ground anchor 400 when ground anchors are used between pegs 10. In either arrangement, the plurality of pegs 10 and (if present) ground anchors 400. keep the matting 200 tight against the ground 300. It is beneficial for the pegs 10 to hold the matting 200 tight against the ground 300 because otherwise vegetation grows from the ground 300 underneath the matting 200 creating flow paths underneath the matting 200.

A method using the kit of parts of Figure 3 to secure matting 200 to the ground 300 to form the assembly shown in Figure 4 comprises the following steps. The matting 200 is placed on the ground 300. The second end 18 of the shaft 14 is engaged with the matting 200. The peg 10 is rotated such that the screw-thread 32 of the peg 10 is screwed through the matting 200 into the ground 300. The peg 10 is rotated until the contact surface 22 contacts the matting 200 and holds the matting 200 against the ground 300.

The method may optionally further comprise, as a first step, engaging the peg 10 with the drive tool 100 to secure the peg 10 to the drive tool 100. The method may comprise transmitting torque from the drive tool to the peg 10 to rotate the peg 10. More specifically, the method may comprise engaging the outer periphery of the head portion 20 of the peg 10 with the cavity 131 within the body 130 of the drive tool 100 to secure the peg 10 to the drive tool and then engaging the peg engagement means 24 with the drive tool engagement means 124 within the cavity 131 to transmit torque from the drive tool 100 to the peg 10.

If the shaft 14 comprises two or more threaded portions 30, 50 and two or more non-threaded portions 40, 60, each threaded portion spaced 30, 50 apart from an adjacent threaded portion 30, 50 by a non-threaded portion 60, the method may further comprise screwing the first threaded portion 30 through the matting 200 into the ground 300 and then screwing the second threaded portion 50 through the matting 200 into the ground 300. The non-threaded portion 60 in between the two threaded portions 30, 50 can reduce the effort needed for a user to screw the peg 10 through the matting 200 into the ground 300 compared to a peg threaded along the entire length of the shaft.

According to soil mechanics, each threaded portion 30, 50 engages the surrounding soil when the peg 10 is screwed into the ground 300. When multiple threaded portions 30, 50 are separated by a non-threaded portion 60, the failure surface in the soil is approximately cylindrical and contained between the threaded portion 30, 50. The shear strength along the shaft length is calculated from the shear strength of the surrounding soil. The failure surface above the top threaded portion 50, is a truncated cone extending to the ground surface. The central angle of the truncated cone is approximately equal to the soil friction angle.

As discussed in Das, B. and Shukla, S. (2013). Earth Anchors. Second ed. USA: J. Ross Publishing, Inc., the pull-out force of the peg can be estimated according to the theory by Mitsch and Clemence (1985), or: $Q_u = Q_p + O_f$

$Q_p$ = Bearing resistance of the truncated cone of soil extending to the ground surface above the top threaded portion 50.

$Q_f$ = Frictional resistance derived at the interface of the soil including and between threaded portion 30, 50.

The magnitude of $Q_p$ can be given as:

Free Draining:

$$Q_p = \pi\gamma K_u tan\theta \left[cos^2\left(\frac{\theta}{2}\right)\right]\left[\frac{D_1 H_1^2}{2} + \frac{H_1^2 tan\left(\frac{\theta}{2}\right)}{3}\right] + W_s$$

Wherein:

$\gamma$ = Unit Weight
$\theta$ = Soil Friction Angle
$K_u$ = Coefficient of lateral earth pressure uplift
$W_s$ = Weight of the soil in the failure zone
$D_1$ = Diameter of the top threaded portion 50
$H_1$ = Distance between ground surface and the top of the threaded portion 50

Cohesive:

$$Q_p = A(C_u F_c + \gamma H_1)$$

Wherein:

$A$ = Area of top threaded portion 50
$F_c$ = Breakout factor
$C_u$ = Undrained shear strength

The frictional resistance derived at the interface of the soil between and including the threaded portion 30, 50 can be given as:

Free Draining:

$$Q_f = \frac{\pi}{2} D_a\gamma(H_n^2 - H_1^2)K_u tan\theta$$

Wherein:

$D_a$ = Average threaded portion 30, 50 diameter
$H_n$ = Distance between the bottom of the threaded portion 30 and the ground surface

Cohesive:

$$Q_f = \pi\left(\frac{D_1 + D_n}{2}\right)(H_n - H_1)C_u$$

Wherein:
$D_n$ = Diameter of the bottom threaded portion 30
Including multiple threaded portions 30, 50 separated by a non-threaded portion 60, rather than a threaded portion extending along the entire shaft length L, will significantly reduce the torque force required to screw the peg 10 into the ground 300, while ensuring a high enough pull-out force. The pull-out force is a measure of how much force is needed to pull the peg 10 linearly out of the ground without a screwing action. When the head portion 20 of the peg 10 further comprises peg engagement means 24, the method may further comprise engaging the drive tool engagement means 124 of a drive tool 100 with the peg engagement means 24 and rotating the drive tool 100 such that the peg 10 is screwed through the matting 200 into the ground 300. In addition, the method may further comprise attaching the drive tool 100 to a drill and operating the drill to rotate the drive tool 100. Alternatively, the drive tool 100 may be used with a bit and brace in which case the drive tool is rotated by turning the bit and brace.

**Claims**

1.  An assembly comprising:

    matting (200); and
    a plurality of pegs (10), each peg (10) for securing the matting (200) to the ground (300) and
    having a longitudinal axis (12) and comprising:

    a shaft (14) extending between a first end (16) and a second end (18) along the longitudinal axis (12), the shaft (14) having a length (L) from the first end (16) to the second end (18); and
    a head portion (20) extending radially outwardly from the first end (16) of the shaft (14),
    wherein:

    the head portion (20) comprises a contact surface (22), from which the shaft (14) extends, for contacting the matting (200) and holding the matting (200) against the ground (300), the contact surface (22) extending around a periphery of the shaft (14); **characterized in that**
    the shaft (14) comprises first and second threaded portions (30, 50) and first and second non-threaded portions (40, 60), each threaded portion (30, 50) having a screw-thread (32) and being spaced apart from an adjacent threaded portion (50, 30) by a non-threaded portion (60);
    the first non-threaded portion (40) extends from the second end (18); and
    the second non-threaded portion (60) extends between the first and second threaded portions (30, 50),

    wherein each peg (10) is screwed into the matting (200) at a respective location such that each peg (10) is spaced apart from an adjacent peg (10).

2.  The assembly of claim 1, wherein at least part of the first non-threaded portion (40) is tapered along the longitudinal axis (12), preferably at an angle of between 0.2 and 15 degrees.

3.  The assembly of any preceding claim, wherein the length (L) of the shaft (14) is between 10 cm and 50 cm, preferably wherein the length (L) of the shaft (14) is between 10 cm and 30 cm.

4.  The assembly of any preceding claim, wherein the first non-threaded portion (40) of the shaft (14) has a length of more than 1/8th of the length (L) of the shaft (14), preferably between 1/8th and half of the length (L) of the shaft (14), more preferably between 1/8th and 1/3rd of the length (L) of the shaft (14), and even more preferably between 1/6th and 1/4th of the length (L) of the shaft (14).

5.  The assembly of any preceding claim, wherein the shaft (14) is tapered along more than 1/4 of the length (L) of the shaft (14), preferably along more than 1/3 of the length (L) of the shaft (14), more preferably along more than 1/2 of the length (L) of the shaft (14) or along the whole of the length (L) of the shaft (14).

6.  The assembly of any preceding claim, wherein the shaft (14) is tapered at an angle that increases from the first end (16) to the second end (18), preferably wherein the angle at which the shaft (14) is tapered increases from the first end (16) to the second end (18) by between 1 and 20 degrees, preferably by between 2 and 8 degrees.

7.  The assembly of any preceding claim, wherein a diameter of the head portion (20) is more than 3 cm and preferably wherein a diameter of the first end (16) of the shaft (14) is less than 2 cm.

8.  The assembly of any preceding claim, wherein the contact surface (22) comprises a surface area of more than 3 $cm^2$, preferably wherein the contact surface (22) is a planar surface.

9. The assembly of any preceding claim wherein each of the threaded portions (30, 50) form the same helix.

10. The assembly of any preceding claim wherein each threaded portion (30, 50) has a length between 1/10th and 9/10th of the length (L) of the shaft (14), preferably between 1/10th and 4/5th of the length (L) of the shaft (14), more preferably between 1/10th and 1/3rd of the length (L) of the shaft (14).

11. The assembly of any preceding claim wherein a third non-threaded portion (80) extends from the first end (16) of the shaft (14).

12. The assembly of any preceding claim wherein the peg (10) is formed of a plastic, preferably wherein the plastic is an engineering plastic, more preferably wherein the plastic is a UV resistant plastic.

13. The assembly of any preceding claim, wherein each threaded portion (30, 50) has a thread height of at least 2 mm, preferably 3-10 mm.

14. The assembly of any preceding claim wherein the first non-threaded portion (40) comprises at least one cutting edge (44a, 44b) proximal to the second end (18).

15. The assembly of any preceding claim wherein the head portion (20) comprises peg engagement means (24) for engaging with a drive tool (100), preferably wherein the peg engagement means (24) comprises one or more protrusions (24).


**Patentansprüche**

1. Anordnung, umfassend:

   eine Matte (200); und
   eine Mehrzahl von Heringen (10), wobei jeder Hering (10) zum Sichern der Matte (200) an den Untergrund (300) dient und eine longitudinale Achse (12) aufweist und umfasst:

   einen Schaft (14), welcher sich zwischen einem ersten Ende (16) und einem zweiten Ende (18) entlang der longitudinalen Achse (12) erstreckt, wobei der Schaft (14) eine Länge (L) von dem ersten Ende (16) zu dem zweiten Ende (18) aufweist; und
   einen Kopfabschnitt (20), welcher sich radial nach außen von dem ersten Ende (16) des Schafts (14) erstreckt,
   wobei:

   der Kopfabschnitt (20) eine Kontaktfläche (22) umfasst, von welcher sich der Schaft (14) erstreckt, zum Kontaktieren der Matte (200) und Halten der Matte (200) gegen den Untergrund (300), wobei sich die Kontaktfläche (22) um einen Umfang des Schafts (14) herum erstreckt; **dadurch gekennzeichnet, dass**
   der Schaft (14) erste und zweite Gewindeabschnitte (30, 50) und erste und zweite gewindefreie Abschnitte (40, 60) umfasst, wobei jeder Gewindeabschnitt (30, 50) ein Schraubengewinde (32) aufweist und von einem benachbarten Gewindeabschnitt (50, 30) durch einen gewindefreien Abschnitt (60) beabstandet ist;
   sich der erste gewindefreie Abschnitt (40) von dem zweiten Ende (18) erstreckt; und
   sich der zweite gewindefreie Abschnitt (60) zwischen den ersten und zweiten Gewindeabschnitten (30, 50) erstreckt,
   wobei jeder Hering (10) in die Matte (200) an einer entsprechenden Position eingeschraubt ist, so dass jeder Hering (10) von einem benachbarten Hering (10) beabstandet ist.

2. Anordnung nach Anspruch 1, wobei wenigstens ein Teil des ersten gewindefreien Abschnitts (40) entlang der longitudinalen Achse (12) zulaufend ist, vorzugsweise bei einem Winkel von zwischen 0,2 und 15 Grad.

3. Anordnung nach einem vorhergehenden Anspruch, wobei die Länge (L) des Schafts (14) zwischen 10 cm und 50 cm beträgt, wobei die Länge (L) des Schafts (14) vorzugsweise zwischen 10 cm und 30 cm beträgt.

**4.** Anordnung nach einem vorhergehenden Anspruch, wobei der erste gewindefreie Abschnitt (40) des Schafts (14) eine Länge von mehr als 1/8 der Länge (L) des Schafts (14) aufweist, vorzugsweise zwischen 1/8 und der Hälfte der Länge (L) des Schafts (14), weiter vorzugsweise zwischen 1/8 und 1/3 der Länge (L) des Schafts (14) und noch weiter vorzugsweise zwischen 1/6 und 1/4 der Länge (L) des Schafts (14).

**5.** Anordnung nach einem vorhergehenden Anspruch, wobei der Schaft (14) entlang mehr als 1/4 der Länge (L) des Schafts (14) zulaufend ist, vorzugsweise entlang mehr als 1/3 der Länge (L) des Schafts (14), weiter vorzugsweise entlang mehr als 1/2 der Länge (L) des Schafts (14) oder entlang der gesamten Länge (L) des Schafts (14).

**6.** Anordnung nach einem vorhergehenden Anspruch, wobei der Schaft (14) bei einem Winkel zulaufend ist, welcher von dem ersten Ende (16) zu dem zweiten Ende (18) zunimmt, wobei vorzugsweise der Winkel, bei welchem der Schaft (14) zulaufend ist, von dem ersten Ende (16) zu dem zweiten Ende (18) um zwischen 1 und 20 Grad zunimmt, vorzugsweise um zwischen 2 und 8 Grad.

**7.** Anordnung nach einem vorhergehenden Anspruch, wobei ein Durchmesser des Kopfabschnitts (20) mehr als 3 cm beträgt und wobei vorzugsweise ein Durchmesser des ersten Endes (16) des Schafts (14) weniger als 2 cm beträgt.

**8.** Anordnung nach einem vorhergehenden Anspruch, wobei die Kontaktfläche (22) einen Kontaktbereich von mehr als 3 cm$^2$ umfasst, wobei vorzugsweise die Kontaktfläche (22) eine ebene Fläche ist.

**9.** Anordnung nach einem vorhergehenden Anspruch, wobei jeder der Gewindeabschnitte (30, 50) dieselbe Schraubenform bildet.

**10.** Anordnung nach einem vorhergehenden Anspruch, wobei jeder Gewindeabschnitt (30, 50) eine Länge zwischen 1/10 und 9/10 der Länge (L) des Schafts (14) aufweist, vorzugsweise zwischen 1/10 und 4/5 der Länge (L) des Schafts (14), weiter vorzugsweise zwischen 1/10 und 1/3 der Länge (L) des Schafts (14).

**11.** Anordnung nach einem vorhergehenden Anspruch, wobei sich ein dritter gewindefreier Abschnitt (80) von dem ersten Ende (16) des Schafts (14) erstreckt.

**12.** Anordnung nach einem vorhergehenden Anspruch, wobei der Hering (10) aus einem Kunststoff gebildet ist, wobei vorzugsweise der Kunststoff ein technischer Kunststoff ist, wobei weiter vorzugsweise der Kunststoff ein UV-beständiger Kunststoff ist.

**13.** Anordnung nach einem vorhergehenden Anspruch, wobei jeder Gewindeabschnitt (30, 50) eine Gewindehöhe von wenigstens 2 mm, vorzugsweise 3-10 mm, aufweist.

**14.** Anordnung nach einem vorhergehenden Anspruch, wobei der erste gewindefreie Abschnitt (40) wenigstens eine Schneidekante (44a, 44b) proximal zu dem zweiten Ende (18) umfasst.

**15.** Anordnung nach einem vorhergehenden Anspruch, wobei der Kopfabschnitt (20) ein Hering-Eingriffsmittel (24) zum Eingreifen mit einem Antriebswerkzeug (100) umfasst, wobei vorzugsweise das Hering-Eingriffsmittel (24) einen oder mehrere Vorsprünge (24) umfasst.

**Revendications**

**1.** Ensemble comportant :

un tapis (200) ; et
une pluralité de chevilles (10), chaque cheville (10) étant destinée à fixer le tapis (200) au sol (300) et présentant un axe longitudinal (12) et comportant :

une tige (14) s'étendant entre une première extrémité (16) et une deuxième extrémité (18) le long de l'axe longitudinal (12), la tige (14) présentant une longueur (L) de la première extrémité (16) à la deuxième extrémité (18) ; et
une portion de tête (20) s'étendant radialement vers l'extérieur à partir de la première extrémité (16) de la tige (14),

dans lequel :

la portion de tête (20) comporte une surface de contact (22), à partir de laquelle s'étend la tige (14), pour être en contact avec le tapis (200) et maintenir le tapis (200) contre le sol (300), la surface de contact (22) s'étendant autour d'une périphérie de la tige (14) ; **caractérisé en ce que**
la tige (14) comporte des première et deuxième portions filetées (30, 50) et des première et deuxième portions non filetées (40, 60), chaque portion filetée (30, 50) présentant un filetage (32) et étant espacée d'une portion filetée (50, 30) adjacente par une portion non filetée (60) ;
la première portion non filetée (40) s'étend à partir de la deuxième extrémité (18) ; et
la deuxième portion non filetée (60) s'étend entre les première et deuxième portions filetées (30, 50), dans lequel chaque cheville (10) est vissée dans le tapis (200) à un emplacement respectif de sorte que chaque cheville (10) soit espacée d'une cheville (10) adjacente.

2. Ensemble selon la revendication 1, dans lequel au moins une partie de la première portion non filetée (40) est effilée le long de l'axe longitudinal (12), de préférence à un angle compris entre 0,2 et 15 degrés.

3. Ensemble selon une quelconque revendication précédente, dans lequel la longueur (L) de la tige (14) est comprise entre 10 cm et 50 cm, de préférence dans lequel la longueur (L) de la tige (14) est comprise entre 10 cm et 30 cm.

4. Ensemble selon une quelconque revendication précédente, dans lequel la première portion non filetée (40) de la tige (14) présente une longueur supérieure à 1/8e de la longueur (L) de la tige (14), de préférence entre 1/8e et la moitié de la longueur (L) de la tige (14), plus préférentiellement entre 1/8e et 1/3e de la longueur (L) de la tige (14), et encore plus préférentiellement entre 1/6e et 1/4e de la longueur (L) de la tige (14).

5. Ensemble selon une quelconque revendication précédente, dans lequel la tige (14) est effilée le long de plus de 1/4 de la longueur (L) de la tige (14), de préférence le long de plus de 1/3 de la longueur (L) de la tige (14), plus préférentiellement le long de plus de 1/2 de la longueur (L) de la tige (14) ou le long de toute la longueur (L) de la tige (14).

6. Ensemble selon une quelconque revendication précédente, dans lequel la tige (14) est effilée selon un angle qui augmente de la première extrémité (16) à la deuxième extrémité (18), de préférence dans lequel l'angle auquel la tige (14) est effilée augmente de la première extrémité (16) à la deuxième extrémité (18) entre 1 et 20 degrés, de préférence entre 2 et 8 degrés.

7. Ensemble selon une quelconque revendication précédente, dans lequel un diamètre de la portion de tête (20) est supérieur à 3 cm et de préférence dans lequel un diamètre de la première extrémité (16) de la tige (14) est inférieur à 2 cm.

8. Ensemble selon une quelconque revendication précédente, dans lequel la surface de contact (22) comporte une superficie supérieure à 3 cm2, de préférence dans lequel la surface de contact (22) est une surface plane.

9. Ensemble selon une quelconque revendication précédente dans lequel chacune des portions filetées (30, 50) forme la même hélice.

10. Ensemble selon une quelconque revendication précédente dans lequel chaque portion filetée (30, 50) présente une longueur comprise entre 1/10e et 9/10e de la longueur (L) de la tige (14), de préférence entre 1/10e et 4/5e de la longueur (L) de la tige (14), plus préférentiellement entre 1/10e et 1/3e de la longueur (L) de la tige (14).

11. Ensemble selon une quelconque revendication précédente dans lequel une troisième portion non filetée (80) s'étend à partir de la première extrémité (16) de la tige (14).

12. Ensemble selon une quelconque revendication précédente dans lequel la cheville (10) est formée d'un plastique, de préférence dans lequel le plastique est un plastique technique, plus préférentiellement dans lequel le plastique est un plastique résistant aux UV.

13. Ensemble selon une quelconque revendication précédente, dans lequel chaque portion filetée (30, 50) présente une hauteur de filetage d'au moins 2 mm, de préférence de 3-10 mm.

**14.** Ensemble selon une quelconque revendication précédente dans lequel la première portion non filetée (40) comporte au moins un bord tranchant (44a, 44b) proximal à la deuxième extrémité (18).

**15.** Ensemble selon une quelconque revendication précédente dans lequel la portion de tête (20) comporte des moyens de mise en prise de cheville (24) pour être en prise avec un outil d'entraînement (100), de préférence dans lequel les moyens de mise en prise de cheville (24) comportent une ou plusieurs saillies (24).

FIG. 1A

EP 4 357 562 B1

FIG. 1B

FIG. 2

FIG. 3

FIG. 4

EP 4 357 562 B1

FIG. 5

FIG. 6

FIG. 7

**EP 4 357 562 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2398808 B
- WO 2016020631 A2
- FR 2869197 A1
- US 10077893 B1
- US 2022170225 A1
- WO 9906639 A1
- GB 2398808 A